# FASCICULE DE BREVET EUROPEEN

(11) **EP 2 684 252 B1**
(45) Date de publication et mention de la délivrance du brevet: **02.09.2015**
(21) Numéro de dépôt: 12715140.5
(22) Date de dépôt: 09.03.2012
(51) Int. Cl.: H01R 4/64, H01L 31/042, F24J 2/52

(54) **DISPOSITIF DE CONNEXION INDIVIDUEL DE MISE A LA TERRE D'UNE INSTALLATION ÉLECTRIQUE COMPORTANT UNE PLURALITÉ DE COMPOSANTS ÉLECTRIQUES INDÉPENDANTS**
GETRENNTE VERBINDUNGSVORRICHTUNG ZUR ERDUNG EINER ELEKTRISCHEN VORRICHTUNG MIT MEHREREN SEPARATEN ELEKTRISCHEN BAUELEMENTEN
SEPARATE CONNECTION DEVICE FOR GROUNDING ELECTRICAL EQUIPMENT COMPRISING A PLURALITY OF SEPARATE ELECTRICAL COMPONENTS

(30) Priorité: 11.03.2011 FR 1152023
(43) Date de publication de la demande: 15.01.2014
(73) Titulaire: Mobasolar Société Par Actions Simplifiées SAS, 68180 Horbourg-Wihr (FR)
(72) Inventeur: KELLER, Marc, F-68127 Oberhergheim (FR)
(74) Mandataire: Koelbel, Caroline
(86) Numéro de dépôt international: PCT/IB2012/000446
(87) Numéro de publication internationale: WO 2012/123797

(56) Documents cités:
- EP-A2- 2 012 390
- WO-A2-2007/103882
- WO-A2-2008/028151
- FR-A1- 2 965 671

## Description

### Domaine technique :

La présente invention concerne un dispositif de connexion individuel de mise à la terre d'une installation électrique comportant une pluralité de composants électriques indépendants, notamment des panneaux photovoltaïques, chaque composant électrique étant délimité par un cadre métallique agencé pour être fixé sur une structure de support métallique, ledit dispositif de connexion individuel étant destiné à être intercalé entre ledit cadre métallique de chaque composant électrique et ladite structure de support métallique pour connecter électriquement et individuellement ledit cadre métallique de chaque composant électrique à ladite structure de support métallique, ledit dispositif de connexion individuel comportant une lame métallique comportant au moins un pli fermé agencé pour former une zone de montage par emboîtement.

### Technique antérieure :

Dans toutes les installations de panneaux photovoltaïques, de panneaux thermiques, de panneaux hybrides thermiques/photovoltaïques, ou similaires, le cadre métallique des panneaux doit être relié à la terre pour répondre aux normes de sécurité électrique et permettre l'écoulement des courants de fuite en cas d'anomalies, de foudre, etc. Jusqu'à ce jour, cette mise à la terre est effectuée par câblage au moyen d'un conducteur de cuivre isolé, fixé au cadre métallique de chaque panneau photovoltaïque par l'intermédiaire de cosses et de vis à travers de trous ou de taraudages réalisés dans ledit cadre. Chaque panneau photovoltaïque doit être mis à la terre de manière individuelle de sorte que le démontage d'un panneau ne déconnecte pas les autres panneaux de l'installation de la prise de terre. De ce fait, tous les panneaux photovoltaïques de l'installation doivent être raccordés individuellement à la prise de terre selon un montage parallèle, ce qui impose un câblage s'étendant de chaque panneau photovoltaïque vers la prise de terre de l'installation. Cette opération de câblage ne peut bien entendu être effectuée que par un électricien habilité et demande un temps d'intervention sur site relativement long. Cette intervention est d'autant plus compliquée à réaliser que l'installation est située en hauteur par exemple sur une toiture. De plus, l'opération de câblage nécessite des longueurs importantes de câbles électriques et un nombre important d'accessoires de raccordement. De plus, la qualité de la connexion des câbles électriques par des cosses et des vis dans des trous réalisés dans le cadre métallique des panneaux n'est pas garantie compte tenu du fait que ce cadre métallique peut être recouvert d'une couche de finition, électriquement isolante, telle qu'une anodisation, un laquage ou similaire.

La publication WO 2008/028151 propose un clip de connexion électrique destiné à être intercalé entre le cadre d'un panneau photovoltaïque et un support de montage. Ce clip se présente sous la forme d'une lame métallique pliée en forme de U dont une des extrémités est recourbée vers l'extérieur pour faciliter son emboîtement sur le bord du cadre et l'autre extrémité comporte des reliefs en forme de dents pour assurer une connexion électrique et traverser la couche de protection des pièces à connecter. Toutefois, sa forme ne lui permet pas de s'incruster, dans la matière métallique à la fois du cadre métallique et de la structure de support, à la manière d'un harpon et sans qu'il soit possible de le démonter sans recourir à un outil. Par conséquent, l'efficacité du contact électrique n'est pas garantie au fil du temps. D'autre part, et contrairement à l'invention, ce clip de connexion n'est pas compatible avec tout type de panneaux photovoltaïques ou similaires, et tout type de structure de support, tel que notamment un rail creux.

Les publications WO 2007/103882 et EP 2 012 390 décrivent d'autres formes de clips métalliques agencés pour connecter électriquement des panneaux photovoltaïques entre eux présentant une forme très spécifique à l'application envisagée et ne permettent pas de répondre aux objectifs visés par l'invention.

### Exposé de l'invention :

La présente invention vise à proposer une solution à ce problème permettant de garantir la qualité du raccordement électrique de la mise à la terre de chaque panneau photovoltaïque, en un laps de temps d'intervention très réduit, sans avoir recours à une personne qualifiée, tout en supprimant voire en réduisant considérablement le besoin de câblage, au moyen d'un dispositif de connexion simple, économique, facile à mettre en oeuvre, fiable et polyvalent.

Dans ce but, l'invention concerne un dispositif de connexion individuel tel que défini en préambule, caractérisé en ce que ladite lame métallique est en acier ressort et en ce que ledit dispositif de connexion comporte au moins deux zones d'extrémité auto-connectantes disposées dans des plans distincts et agencées pour créer un contact électrique entre ledit cadre métallique dudit composant électrique et ladite structure de support métallique, lesdites zones d'extrémité auto-connectantes comportant une denture pointue agencée pour s'incruster dans la matière métallique dudit cadre et de ladite structure de support, et étant formées sur une partie pliée de ladite lame métallique de sorte que les dentures s'étendent dans des directions opposées et dans des plans destinés à couper les plans dudit cadre et de ladite structure de support lorsque le dispositif de connexion est monté.

La forme particulière des zones d'extrémité auto-connectantes permet à l'une de ces zones de mordre le cadre métallique du composant électrique, et à l'autre de ces zones de mordre la structure de support métallique en s'opposant à son retrait. En outre, grâce à une telle configuration, la denture s'incruste dans la matière métallique à la fois du cadre métallique et de la structure de support métallique lors de l'introduction en force du dispositif de connexion entre le composant électrique et la structure de support garantissant ainsi un très bon contact électrique avec une résistance ohmique négligeable, voire nulle. De ce fait, une fois intercalé entre le cadre métallique d'un composant électrique et la structure de support métallique, le dispositif de connexion selon l'invention s'auto-bloque grâce à la fois à sa forme, à ses propriétés d'élasticité et à ses zones d'extrémités qui assurent un ancrage à la manière d'un harpon, avec une pression constante grâce à l'effet ressort de la matière de la lame, y compris sur une structure support comportant un rail creux.

Dans une première variante de réalisation, ladite lame métallique peut avoir une forme générale en U, une des zones d'extrémité auto-connectante étant orientée vers l'intérieur du U et l'autre zone d'extrémité auto-connectante étant orientée vers l'extérieur du U.

Selon les modes de réalisation, ladite zone d'extrémité auto-connectante orientée à l'extérieur du U peut être éloignée de ladite zone de montage par une extension et orientée dans une direction sensiblement perpendiculaire au U. Elle peut être biseautée de sorte que la denture est alignée sur une droite non parallèle à ladite zone de montage. Ou encore, elle peut être située au droit de la zone de montage.

Dans une seconde variante de réalisation, ladite lame métallique peut avoir une forme générale en S, les deux zones d'extrémité auto-connectantes étant orientées respectivement vers l'extérieur du S.

Pour optimiser sa fabrication, ledit dispositif de connexion peut comporter une zone d'indexage, qui peut être formée par l'absence d'une dent dans chaque denture.

Ce but est également atteint par une installation électrique comportant une pluralité de composants électriques indépendants, notamment des panneaux photovoltaïques, chaque composant électrique étant délimité par un cadre métallique agencé pour être fixé sur une structure de support métallique et connecté électriquement et individuellement sur ladite structure de support métallique par au moins un dispositif de connexion individuel tel que défini ci-dessus, intercalé entre ledit cadre métallique de chaque composant électrique et ladite structure de support métallique.

### Description sommaire des dessins :

La présente invention et ses avantages apparaîtront mieux dans la description suivante de deux modes de réalisation donnés à titre d'exemples non limitatifs, en référence aux dessins annexés, dans lesquels :
- la figure 1 est une vue de détail en perspective d'un premier exemple de montage d'un panneau photovoltaïque montrant un premier mode de réalisation d'un dispositif de connexion selon l'invention,
- la figure 2 est une vue de côté du montage de la figure 1,
- les figures 3A et 3B sont des vues de côté et en perspective du dispositif de connexion des figures 1 et 2,
- la figure 4 est une vue de détail en perspective d'un deuxième exemple de montage d'un panneau photovoltaïque montrant un deuxième mode de réalisation d'un dispositif de connexion selon l'invention,
- la figure 5 est une vue de côté du montage de la figure 4,
- les figures 6A et 6B sont des vues de côté et en perspective du dispositif de connexion des figures 4 et 5,
- la figure 7 est une vue de détail en perspective d'un troisième exemple de montage d'un panneau photovoltaïque montrant un troisième mode de réalisation d'un dispositif de connexion selon l'invention,
- les figures 8A et 8B sont des vues de côté et en perspective du dispositif de connexion de la figure 7,
- les figures 9A, 9B et 9C sont des vues de côté, de dessus et en perspective d'un quatrième mode de réalisation d'un dispositif de connexion selon l'invention,
- les figures 10A et 10B sont de vues de côté et en perspective d'un cinquième mode de réalisation d'un dispositif de connexion selon l'invention, et
- la figure 11 est une vue de dessus d'un sixième mode de réalisation d'un dispositif de connexion selon l'invention représenté à plat avant pliage.

### Illustrations de l'invention et différentes manières de la réaliser :

La description qui suit porte sur une installation électrique comportant une pluralité de panneaux photovoltaïques 1. Bien entendu, le dispositif de connexion selon l'invention s'applique à tout type de composants électriques indépendants nécessitant une mise à la terre, tels que des panneaux thermiques, des panneaux hybrides thermiques/photovoltaïques ou similaires, de même que les onduleurs ou micro-onduleurs faisant partie de ladite installation ainsi que toute autre surface métallique d'une installation électrique nécessitant une mise à la terre.

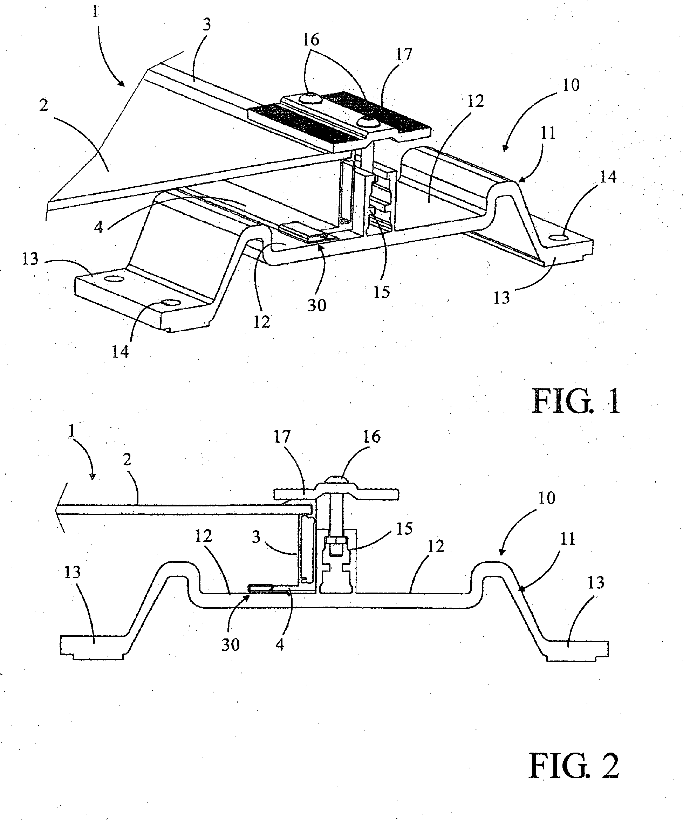

Les panneaux photovoltaïques 1 comportent de manière connue, et en référence aux figures, une plaque de cellules photovoltaïques 2 entourée d'un cadre métallique 3 permettant leur fixation sur tout type de structure de support 10, 20, 50 au sol ou en hauteur, sur des structures fixes ou mobiles, etc. Ce cadre métallique 3 peut être réalisé en aluminium brut, anodisé, laqué ou similaire, ou encore en toute autre matière équivalente brute, traitée ou recouverte d'une couche de protection et/ou de finition. Ces panneaux photovoltaïques 1 sont montés sur une structure de support métallique 10, 20, 50 de forme et de conception adaptées à l'application et à la destination desdits panneaux. La structure de support métallique 10, 20, 50 peut être réalisée en acier inoxydable brut, galvanisé, laqué ou similaire, en aluminium brut, anodisé, laqué ou similaire, ou en toute autre matière équivalente. Les figures 1, 2 ; 4, 5 et 7 illustrent trois exemples de montage de ces panneaux photovoltaïques non limitatifs.

Dans le premier exemple de montage illustré aux figures 1 et 2, la structure de support métallique 10 comporte une pluralité d'étiers de montage 11 individuels, chaque panneau photovoltaïque 1 étant fixé sur au moins deux et de préférence quatre étriers de montage 11 disposés à proximité des angles dudit panneau, étant précisé que les étriers de montage 11 peuvent être communs à deux panneaux adjacents. Dans l'exemple illustré, chaque étrier de montage 11a sensiblement une forme en oméga Ω définissant, sur une aile centrale plane, deux zones de réception 12 du cadre métallique 3 d'un panneau photovoltaïque 1, ces zones de réception 12 étant disposées symétriquement de part et d'autre d'un rail médian 15 perpendiculaire à l'aile centrale plane. Cette aile centrale plane est encadrée par deux pattes de fixation 13 pourvues de trous de fixation 14 agencés pour recevoir des vis ou similaires permettant de fixer l'étrier du montage 11 sur un panneau, une toiture ou similaire. Le rail médian 15 est agencé pour recevoir des vis 16 ou similaires permettant de fixer le panneau photovoltaïque 1 par pincement entre la zone de réception 12 correspondante et une bride de maintien 17. Dans l'invention, on prévoit de mettre à la terre les étriers de montage 12 par l'intermédiaire d'un câble électrique (non représenté) connecté à un des trous 14 des pattes de fixation 13. Les étriers de montage 12 d'une même rangée peuvent ainsi être raccordés en série sur la prise de terre de l'installation et les rangées parallèles d'étriers de montage 12 peuvent être raccordées en parallèle sur ladite prise de terre.

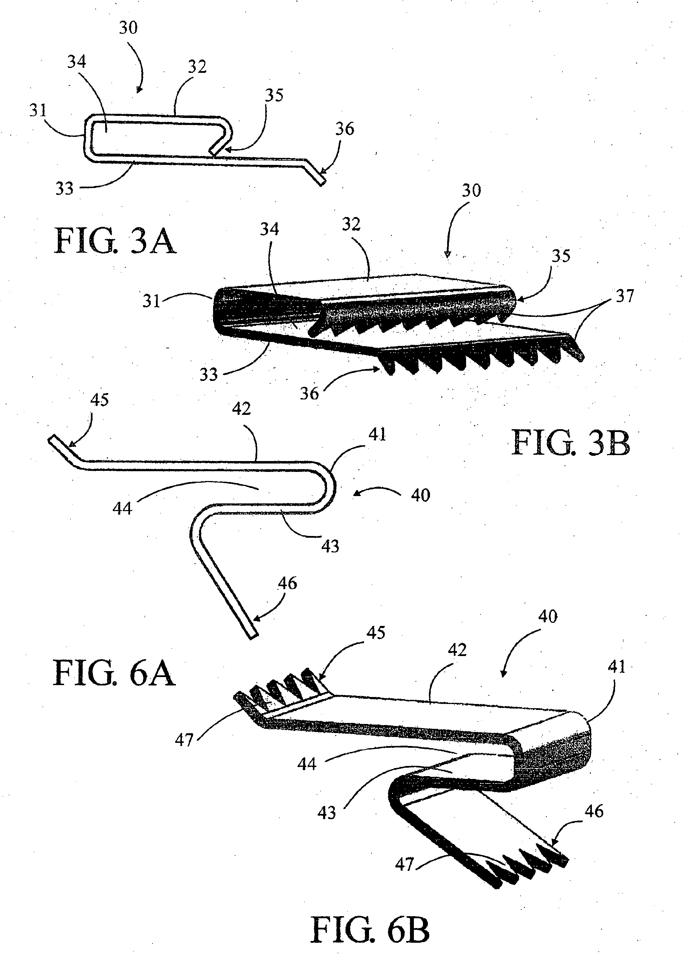

Dans cet exemple de montage, le dispositif de connexion 30 selon un premier mode de réalisation de l'invention est représenté plus en détail aux figures 3A et 3B. Il est constitué d'une lame métallique élastique, par exemple en acier ressort inoxydable, présentant une forme générale en U. Il comporte dans une zone médiane un pli fermé 31 délimitant, entre deux parois 32, 33 sensiblement parallèles, une zone de montage 34 agencée pour s'emboîter sur le bord arrière 4 du cadre métallique 3 du panneau photovoltaïque 1. La hauteur de cette zone de montage 34 est sensiblement égale à l'épaisseur du bord arrière 4. Ce dispositif de connexion 30 comporte deux zones d'extrémité auto-connectantes 35 et 36, formées par une partie pliée de la lame métallique élastique, disposées dans des plans distincts et orientées dans des directions opposées. Dans la description, le terme « opposé » ne signifie pas forcément que les directions sont diamétralement opposées, mais que les deux zones d'extrémité s'opposent pour éviter le démontage accidentel du dispositif de connexion. La zone d'extrémité 35 est reliée à la paroi 32 par un pli fermé, orientée vers l'intérieur du U et vers le pli 31 dans le but de mordre le bord arrière 4 du cadre métallique 3 et de s'opposer à son retrait à la manière d'un harpon. La zone d'extrémité 36 est reliée à la paroi 33 par un pli ouvert, orientée vers l'extérieur du U et à l'opposé du pli 31 pour mordre la zone de réception 12 de l'étrier de montage 11. Chaque zone d'extrémité auto-connectante 35, 36 comporte une denture 37 pointue ou acérée agencée pour s'incruster dans la matière métallique à la fois du cadre métallique 3 du panneau photovoltaïque 1 lors de l'introduction en force du dispositif de connexion 30 sur le bord arrière 4, et de l'étrier de montage 11 lors du serrage des vis 16 et de la bride de maintien 17. La denture 37 peut être remplacée par toute autre forme équivalente permettant dé traverser, percer ou enlever la couche de protection des pièces métalliques du panneau photovoltaïque 1 et de la structure de support 10 dans le but de garantir un très bon contact électrique avec une résistance ohmique négligeable voire nulle. Le cadre métallique 3 des panneaux et les étriers de montage 11 étant généralement fabriqués en aluminium ou similaire, le contact électrique créée par et avec le dispositif de connexion 30 ne génère aucune corrosion électrolytique garantissant une qualité fiable dans le temps.

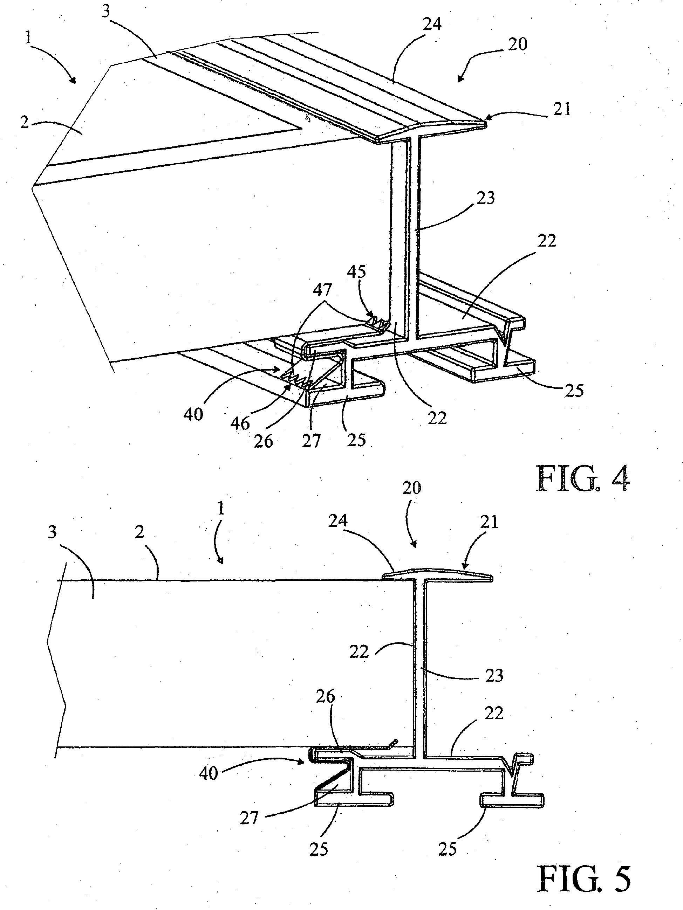

Dans le deuxième exemple de montage illustré aux figures 4 et 5, la structure de support métallique 20 comporte une pluralité de rails de montage 21 parallèles et communs à plusieurs panneaux photovoltaïques 1, de sorte que les panneaux photovoltaïques 1 d'une même rangée sont maintenus entre deux rails de montage 21 parallèles. Les rails de montage 21 sont également communs à deux rangées adjacentes de panneaux photovoltaïques 1. Chaque rail de montage 21 a une forme sensiblement en I, définissant deux zones de réception 22 du cadre métallique 3 d'un panneau photovoltaïque 1, ces zones de réception 22 étant disposées symétriquement de part et d'autre de l'aile centrale 23 du I. L'aile supérieure 24 du rail de montage 21 est dissymétrique pour permettre le montage des panneaux photovoltaïques 1 par emboîtement d'un des bords supérieur ou inférieur dans un des rails de montage 21, puis par emboîtement de l'autre bord inférieur ou supérieur dans le rail de montage 21 opposé. Ainsi, les panneaux photovoltaïques 1 sont retenus entre deux rails de montage 21 parallèles, sans organe de fixation exerçant sur ces panneaux des contraintes mécaniques. Ce mode de montage particulier est simple et rapide à mettre en oeuvre. De plus, il permet de réaliser un assemblage de panneaux photovoltaïques aussi bien sur une surface plane que sur une surface courbe, voire une surface inclinée étant donné que les dispositifs de connexion 40 renforcent le blocage mécanique des panneaux comme expliqué plus loin. Chaque rail de montage 21 est porté par deux profilés 25 en T inversé, parallèles et agencés pour se monter dans des profilés complémentaires fixés sur un panneau, une toiture ou similaire. Ces profilés 25 délimitent avec la base du I du rail de montage 21 des gorges 27 ouvertes vers l'extérieur. Les rails de montage 21 sont raccordés en parallèle sur la prise de terre de l'installation par câblage.

Dans cet exemple de montage, le dispositif de connexion 40 selon un deuxième mode de réalisation de l'invention est représenté plus en détail aux figures 6A et 6B. Il est constitué d'une lame métallique élastique, par exemple en acier ressort inoxydable, présentant une forme générale en S. Il comporte dans une zone médiane un pli fermé 41 délimitant, entre deux parois 42, 43 sensiblement parallèles, une zone de montage 44 agencée pour s'emboîter sur le bord arrière 26 du rail de montage 21. La hauteur de cette zone de montage 44 est sensiblement égale à l'épaisseur du bord arrière 26. Ce dispositif de connexion 40 comporte deux zones d'extrémité auto-connectantes 45 et 46, formées par une partie pliée de la lame métallique élastique, disposées dans des plans distincts et orientées dans des directions opposées. La zone d'extrémité 45 est reliée à la paroi 42 par un pli ouvert, orientée vers l'extérieur du S et à l'opposé du pli 41 dans le but de mordre la face arrière du cadre métallique 3 du panneau photovoltaïque 1 et de s'opposer à son retrait à la manière d'un harpon. La zone d'extrémité 46 est reliée à la paroi 43 par un pli fermé, orientée vers l'extérieur du S et en direction du pli 41 pour mordre la gorge 27 correspondante du rail de montage 21 et s'opposer à son retrait à la manière d'un harpon. Chaque zone d'extrémité auto-connectante 45, 46 comporte une denture 47 pointue ou acérée agencée pour s'incruster dans la matière métallique à la fois du rail de montage 21 lors de l'introduction en force du dispositif de connexion 40 sur son bord arrière 26 et du cadre métallique 3 du panneau photovoltaïque 1 lors de son emboîtement dans le rail de montage 21. Comme dans l'exemple précédent, la denture 47 peut être remplacée par toute autre forme équivalente permettant de traverser, percer ou enlever la couche de protection des pièces métalliques du panneau photovoltaïque 1 et de la structure de support 20 dans le but de garantir un très bon contact électrique avec une résistance ohmique négligeable voire nulle. Le cadre métallique 3 des panneaux et les rails de montage 21 étant généralement fabriqués en aluminium ou similaire, le contact électrique créée par et avec le dispositif de connexion 40 ne génère aucune corrosion électrolytique garantissant une qualité fiable dans le temps. Dans ce type de montage, les dispositifs de connexion 40 renforcent le blocage mécanique des panneaux photovoltaïques 1 sur la structure de montage 20 et permettent ainsi un montage desdits panneaux sur des surfaces inclinées.

On comprend aisément que le dispositif de connexion 30 en forme de U décrit dans l'exemple de montage précédent peut remplacer le dispositif de connexion 40 en forme de S, en emboîtant simplement sa zone de montage 34 sur le bord arrière 26 du rail de montage 21 et en orientant la zone d'extrémité auto-connectante 36 dans la zone de réception 22 du rail de montage 21 pour mordre le cadre 3 du panneau photovoltaïque 1 lors de son montage. Ainsi, le dispositif de connexion 30 en forme de U peut être considéré comme un dispositif universel.

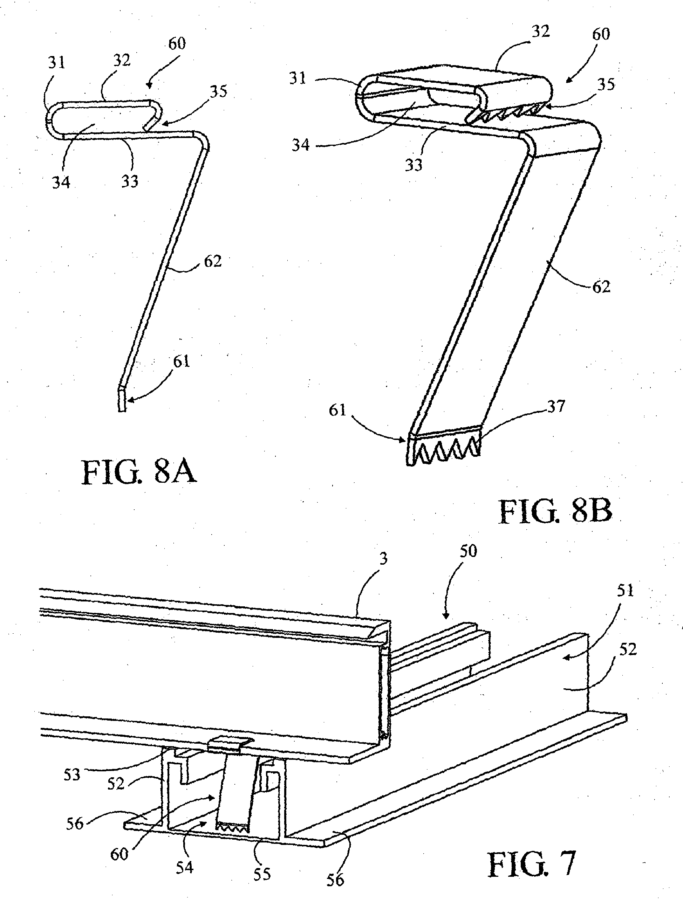

Dans le troisième exemple de montage illustré à la figure 7, la structure de support métallique 50 comporte une pluralité de rails de montage 51 parallèles et communs à plusieurs panneaux photovoltaïques 1, de sorte que les panneaux photovoltaïques 1 d'une même rangée sont maintenus sur au moins deux rails de montage 51 parallèles. Chaque rail de montage 51 est creux et a une forme sensiblement en U, dont l'extrémité supérieure des ailes latérales 52 définit une zone de réception 53 plane pour le cadre métallique, 3 d'un panneau photovoltaïque 1 maintenu par des brides de maintien (non représentées) fixées sur les rails de montage 51, comme dans l'exemple des figures 1 et 2. Les ailes latérales 52 délimitent entre elles une gorge 54 pour recevoir un dispositif de connexion 60 comme décrit ci-après. La base 55 de chaque rail de montage 51 est prolongée au-delà des ailes latérale 52 par des pattes de fixation 56 coplanaires agencées pour être fixées sur un panneau, une toiture ou similaire. Les rails de montage 51 sont raccordés en parallèle sur la prise de terre de l'installation par câblage.

Dans cet exemple de montage, le dispositif de connexion 60 selon un troisième mode de réalisation de l'invention est représenté plus en détail aux figures 8A et 8B. Sa conception est proche de celle du dispositif de connexion 30 illustré aux figures 3A et 3B. De ce fait, les parties communes portent les mêmes numéros de référence et ne sont pas décrites à nouveau. Le dispositif de connexion 60 se différencie par le fait que la zone d'extrémité auto-connectante 61 orientée à l'extérieur du U est éloignée de la zone de montage 34 par une extension 62 reliée à la paroi 33 par un pli fermé. Cette zone d'extrémité auto-connectante 61 est orientée dans une direction sensiblement perpendiculaire au U pour mordre la base 55 du rail de montage 51. Comme dans les exemples précédents, elle comporte une denture 37 pointue ou acérée agencée pour s'incruster dans la matière métallique du rail de montage 51 lors du montage du panneau photovoltaïque 1.

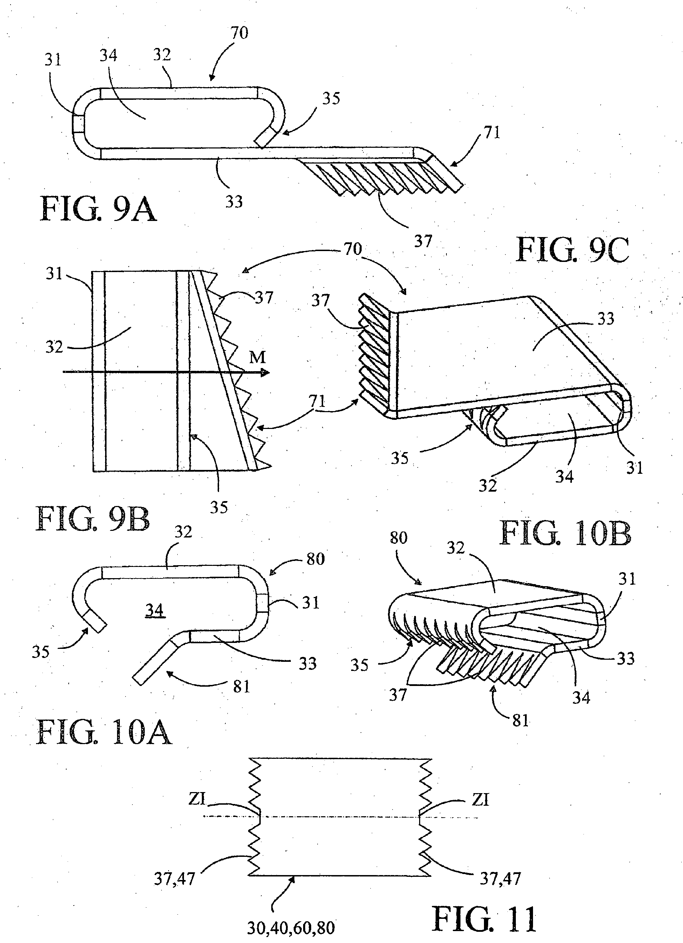

Les figures 9A, 9B et 9C illustrent un dispositif de connexion 70 équivalent à celui des figures 3A et 3B. De ce fait, les parties communes portent les mêmes numéros de référence et ne sont pas décrites à nouveau. Dans cet exemple, la zone d'extrémité auto-connectante 71 orientée à l'extérieur du U n'est pas parallèle à la zone de montage 34 mais biseautée de sorte que la denture 37 est alignée sur une droite non perpendiculaire à la direction de montage du dispositif représentée par la flèche M pour mordre le cadre métallique du panneau photovoltaïque à des niveaux différents et provoquer des griffures plus importantes sur sa longueur.

Les figures 10A et 10B illustrent un dispositif de connexion 80 équivalent à celui des figures 3A et 3B. De ce fait, les parties communes portent les mêmes numéros de référence et ne sont pas décrites à nouveau. Dans cet exemple, la zone d'extrémité auto-connectante 81 orientée à l'extérieur du U est située au droit de la zone de montage 34 pour s'adapter à d'autres types de rails de montage.

Ces quelques exemples de réalisation permettent d'illustrer les multiples possibilités offertes par le dispositif de connexion de l'invention pour s'adapter à des cadres métalliques de composants électriques ainsi qu'à des structures de support métalliques de ces composants qui peuvent être très différentes. De fait, le dispositif de connexion selon l'invention est un dispositif polyvalent.

Lorsque les dispositifs de connexion 30, 40, 60, 70, 80 sont mis en place respectivement sur le cadre métallique 3 de chaque panneau photovoltaïque 1 et sur les structures de support métalliques 10, 20, 50, ils s'auto-bloquent grâce à la fois à leur forme, à leurs propriétés élastiques et à leurs zones d'extrémité qui assurent un ancrage à la manière d'un harpon, avec une pression constante grâce à l'effet ressort de la lame en acier ressort. Pour les démonter, il faut utiliser un outil pour dégager les dentures en prise avec la matière.

### Possibilités d'application industrielle :

Les dispositifs de connexion 30, 40, 60, 70, 80 tels que décrits sont avantageusement fabriqués à partir d'une bande continue en acier ressort inoxydable ou similaire, qui est déroulée puis emboutie à plat en fonction du développé du dispositif à réaliser. Chaque pièce emboutie est ensuite pliée aux endroits définis pour conférer au dispositif la forme requise conformément aux différents modes de réalisation des figures 3, 6, 8, 9 et 10 illustrés à titre d'exemples non exhaustifs. Pour optimiser l'industrialisation de ce procédé de fabrication, on peut prévoir lors de l'emboutissage des pièces, une zone d'indexage ZI permettant de positionner correctement et précisément les pièces embouties pour leur manutention et leur pliage. Dans l'exemple illustré à la figure 11, la zone d'indexage ZI est formée par l'absence d'une dent au centre de chaque denture 37, 47 marquant l'axe médian A de la pièce. Bien entendu, tout autre moyen d'indexage peut être prévu.

Il apparaît clairement que l'invention permet d'atteindre les buts fixés. Notamment, lors du montage d'une installation de panneaux photovoltaïques 1 sur une structure de support métallique 10, 20, 50 ou similaire:
▪ on fixe préalablement soit les étriers de montage 11, soit les rails de montage 21, 51 ou similaire, sur un panneau de réception, une toiture, une façade ou similaire, pour créer une structure de support métallique 14, 20, 50,
▪ on met à la terre ces structures métalliques 10, 20, 50 par câblage,
▪ on met en place les dispositifs de connexion 30, 40, 60, 70, 80 soit directement sur les panneaux photovoltaïques 1, soit directement sur les rails de montage 21, 51 selon leur configuration, qui s'auto-bloquent, et
▪ on monte les panneaux photovoltaïques 1 sur ces structures de montage 10, 20, 50.

Dans les différents cas de figure, les panneaux photovoltaïques 1 sont automatiquement mis à la terre au travers de leur structure de support métallique 10, 20, 50 et par l'intermédiaire des dispositifs de connexion 30, 40, 60, 70, 80 sans devoir effectuer un câblage additionnel de chaque panneau. Les panneaux photovoltaïques 1 sont par conséquent raccordés automatiquement en parallèle à la prise de terre. Ainsi, le démontage d'un panneau photovoltaïque 1 ne déconnecte pas le reste de l'installation de la mise à la terre, dans le respect des normes en vigueur.

Ces dispositifs de connexion 30, 40, 60, 70, 80 cumulent par conséquent plusieurs fonctions :
- lors de leur mise en place, ils altèrent la surface des cadres métalliques 3 des panneaux photovoltaïques 1 et celle des étriers ou rails de montage 11 21, 51 pour éliminer la couche anodisée, laquée ou similaire, et s'ancrent dans l'aluminium pour créer un bon contact électrique avec une résistance ohmique négligeable voire nulle,
- ils exercent une pression constante dans l'aluminium grâce à leur forme et à l'effet ressort des lames élastiques, garantissant une fiabilité du contact électrique dans la durée,
- dans le mode de montage illustré aux figures 4 et 5, ils renforcent le blocage mécanique des panneaux photovoltaïques 1 dans les rails de montage 21.

La présente invention n'est pas limitée aux exemples de réalisation décrits mais s'étend à toute modification et variante évidentes pour un homme du métier tout en restant dans l'étendue de la protection définie dans les revendications annexées. De même, l'exemple d'application à une installation de panneaux photovoltaïques n'est pas limitatif et s'étend à tout autre type d'installation électrique comportant une pluralité de composants indépendants, tels que des panneaux thermiques, des panneaux hybrides thermiques/photovoltaïques, ou similaires, des onduleurs et micro-onduleurs faisant partie de ladite installation ainsi que toute autre surface métallique d'une installation électrique nécessitant une mise à la terre.

## Revendications

1. Dispositif de connexion (30, 40, 60, 70, 80) individuel de mise à la terre d'une installation électrique comportant une pluralité de composants électriques (1) indépendants, notamment de panneaux photo voltaïques, chaque composant électrique (1) étant délimité par un cadre métallique (3) agencé pour être fixé sur une structure de support métallique (10, 20, 50), ledit dispositif de connexion (30, 40, 60, 70, 80) individuel étant destiné à être intercalé entre ledit cadre métallique (3) de chaque composant électrique (1) et ladite structure de support métallique (10, 20, 50) pour connecter électriquement et individuellement ledit cadre métallique (3) dudit composant électrique (1) à ladite structure de support métallique (10, 20, 50), ledit dispositif de connexion (30, 40, 60, 70, 80) individuel comportant une lame métallique comportant au moins un pli fermé (31, 41) agencé pour former une zone de montage (34, 44) par emboîtement, **caractérisé en ce que** ladite lame métallique est une lame métallique élastique telle qu'en acier ressort inoxydable et **en ce que** ledit dispositif de connexion comporte au moins deux zones d'extrémité auto-connectantes (35, 36 ; 45, 46 ; 35, 61 ; 35, 71 ; 35, 81), disposées dans des plans distincts et agencées pour créer un contact électrique entre ledit cadre métallique (3) et ladite structure de support métallique (10, 20, 50), lesdites zones d'extrémité auto-connectantes comportant une denture (37, 47) pointue agencée pour s'incruster dans la matière métallique dudit cadre (3) et de ladite structure de support (10, 20, 50) et étant formées sur une partie pliée de ladite lame métallique de sorte que les dentures (37, 47) s'étendent dans des directions opposées et dans lesdits plans distincts destinés à couper le plan dudit cadre (3) et le plan de ladite structure de support (10, 20, 50) lorsque le dispositif de connexion est monté, de telle sorte à assurer un ancrage dans le cadre (3) et la structure de support (10, 20, 50) à la manière d'un harpon, avec une pression constante grâce à l'effet ressort de la matière de ladite lame métallique, en s'opposant à son retrait du cadre et de la structure de support, et ainsi à réaliser un auto-blocage de la lame métallique une fois intercalée entre le cadre et la structure de support.

2. Dispositif selon la revendication 1, **caractérisé en ce que** ladite lame métalliques a une forme générale en U, une des zones d'extrémité auto-connectante (35) étant orientée vers l'intérieur du U, et l'autre zone d'extrémité auto-connectante (36, 61, 71, 81) étant orientée vers l'extérieur du U.

3. Dispositif selon la revendication 2, **caractérisé en ce que** ladite zone d'extrémité auto-connectante (61) orientée à l'extérieur du U est éloignée de ladite zone de montage (34) par une extension (62) et orientée dans une direction sensiblement perpendiculaire au U.

4. Dispositif selon la revendication 2, **caractérisé en ce que** ladite zone d'extrémité auto-connectante (71) orientée à l'extérieur du U est biseautée de sorte que la denture (37) est alignée sur une droite non parallèle à ladite zone de montage (34).

5. Dispositif selon la revendication 2, **caractérisé en ce que** ladite zone d'extrémité auto-connectante (81) orientée à l'extérieur du U est située au droit de ladite zone de montage (34).

6. Dispositif selon la revendication 1, **caractérisé en ce que** ladite lame métallique a une forme générale en S, les deux zones d'extrémité auto-connectantes (45, 46) étant orientées respectivement vers l'extérieur du S.

7. Dispositif selon l'une quelconque des revendications précédentes, **caractérisé en ce qu'**ils comportent une zone d'indexage (ZI).

8. Dispositif selon la revendication 7, **caractérisé en ce que** ladite zone d'indexage (ZI) est formée par l'absence d'une dent dans chaque denture (37, 47).

9. Installation électrique comportant une pluralité de composants électriques indépendants (1), notamment des panneaux photovoltaïques, chaque composant électrique (1) étant délimité par un cadre métallique (3) agencé pour être fixé sur une structure de support métallique (10, 20, 50) et connecté électriquement et individuellement sur ladite structure de support métallique (10, 20, 50) par au moins un dispositif de connexion (30, 40, 60, 70, 80) individuel selon l'une quelconque des revendications précédentes, intercalé entre ledit cadre métallique (3) de chaque composant électrique (1) et ladite structure de support métallique (10, 20, 50), ledit dispositif de connexion (30, 40, 60, 70, 80) individuel comportant une lame métallique comportant au moins un pli fermé (31, 41) agencé pour former une zone de montage (34, 44) par emboîtement, **caractérisée en ce que** ladite lame métallique de chaque dispositif de connexion est une lame métallique élastique telle qu'en acier ressort inoxydable et **en ce que** chaque dispositif de connexion comporte au moins deux zones d'extrémité auto-connectantes (35, 36 ; 45, 46 ; 35, 61 ; 35, 71 ; 35, 81), disposées dans des plans distincts et agencées pour créer un contact électrique entre ledit cadre métallique (3) et ladite structure de support métallique (10, 20, 50), lesdites zones d'extrémité auto-connectantes comportant une denture (37, 47) pointue agencée pour s'incruster dans la matière métallique dudit cadre (3) et de ladite structure de support (10, 20, 50) et étant formées sur une partie pliée de ladite lame métallique de sorte que les dentures (37, 47) s'étendent dans des directions opposées et dans lesdits plans distincts pour couper le plan dudit cadre (3) et le plan de ladite structure de support (10, 20, 50) de telle sorte à assurer un ancrage dans le cadre (3) et la structure de support (10, 20, 50) à la manière d'un harpon, avec une pression constante grâce à l'effet ressort de la matière de ladite lame métallique, en s'opposant à son retrait du cadre et de la structure de support, et ainsi à réaliser un auto-blocage de la lame métallique une fois intercalée entre le cadre et la structure de support.

## Patentansprüche

1. Getrennte Verbindungsvorrichtung (30, 40, 60, 70, 80) zur Erdung einer elektrischen Vorrichtung mit mehreren separaten elektrischen Bauelementen (1), insbesondere Photovoltaik-Module, wobei jedes elektrische Bauelement (1) von einem Metallrahmen (3) begrenzt ist, der ausgelegt ist, um an einer metallischen Tragstruktur (10, 20, 50) befestigt zu werden, wobei besagte getrennte Verbindungsvorrichtung (30, 40, 60, 70, 80) dazu bestimmt ist, zwischen besagtem Metallrahmen (3) jedes elektrischen Bauelementes (1) und besagter metallischen Tragstruktur (10, 20, 50) eingefügt zu werden, um besagten Metallrahmen (3) von besagtem elektrischen Bauelement (1) mit besagter metallischen Tragstruktur (10, 20, 50) elektrisch und separat zu verbinden, wobei besagte getrennte Verbindungsvorrichtung (30, 40, 60, 70, 80) ein Metallblatt beträgt mit zumindest einem geschlossenen Falz (31, 41), der ausgelegt ist, um einen Einfüge-Montegebereich (34, 44) zu bilden, **dadurch gekennzeichnet, dass** besagtes Metallblatt ein elastisches Metallblatt, zum Beispiel aus rostfreiem Federstahl, ist, und dadurch, dass besagte Verbindungsvorrichtung zumindest zwei selbstverbindende, in unterschiedlichen Ebenen angeordnete Endbereiche (35, 36 ; 45, 46 ; 35, 61 ; 35, 71 ; 35, 81) beträgt, die ausgelegt sind, um einen elektrischen Kontakt zwischen besagtem Metallrahmen (3) und besagter metallischen Tragstruktur (10, 20, 50) herzustellen, wobei besagte selbstverbindende Endbereiche eine spitze Verzahnung (37, 47) betragen, die ausgelegt ist, um sich im Metall-Material von besagtem Rahmen (3) und von besagter Tragstruktur (10, 20, 50) zu inkrustieren, und die auf einem gefalzten Teil von besagtem Metallblatt so ausgebildet ist, dass sich die Verzahnungen (37, 47) in entgegen gesetzte Richtungen und in besagten unterschiedlichen Ebenen erstrecken, die dazu bestimmt sind, die Ebene von besagten Rahmen (3), sowie die Ebene von besagter Tragstruktur (10, 20, 50) zu schneiden wenn die Verbindungsvorrichtung montiert ist, um so wie eine Harpune im Rahmen (3) und in der Tragstruktur (10, 20, 50) dank des Federeffekts des Materials von besagtem Metallblatt ein Verankerung mit einem konstanten Druck zu bilden, und dem Herausziehen des Metallblatts vom Rahmen und von der Tragstruktur entgegen zu wirken, und somit ein Selbstklemmung des Metallblatts zu erwirken, wenn dieses zwischen dem Rahmen und der Tragstrukur eingefügt ist.

2. Vorrichtung nach Anspruch 1, **dadurch gekennzeichnet, dass** besagtes Metallblatt eine allgemeine U-Form aufweist, wobei einer der selbstverbindenden Endbereiche (35) zur Innenseite der U-Form hin und der andere selbstverbindende Endbereich (36, 61, 71, 81) zur Außenseite der U-Form hin gerichtet ist.

3. Vorrichtung nach Anspruch 2, **dadurch gekennzeichnet, dass** besagter, zur Außenseite der U-Form hin gerichtete selbstverbindende Endbereich (61) durch eine in einer zur U-Form merklich senkrechten Richtung orientierte Verlängerung (62) von besagtem Montagebereich (34) entfernt angeordnet ist.

4. Vorrichtung nach Anspruch 2, **dadurch gekennzeichnet, dass** besagter, zur Außenseite der U-Form hin gerichtete selbstverbindende Endbereich (71) schräg angeordnet ist, so dass die Verzahnung (37) auf einer zu besagtem Montagebereich (34) nicht parallelen Geraden ausgerichtet ist.

5. Vorrichtung nach Anspruch 2, **dadurch gekennzeichnet, dass** besagter, zur Außenseite der U-Form hin gerichtete selbstverbindende Endbereich (81) sich unter besagtem Montagebereich (34) befindet.

6. Vorrichtung nach Anspruch 1, **dadurch gekennzeichnet, dass** besagtes Metallblatt eine allgemeine S-Form aufweist, wobei die beiden selbstverbindenden Endbereiche (45, 46) jeweils zur Außenseite der S-Form hin gerichtet sind.

7. Vorrichtung nach einem beliebigen der vorhergehenden Ansprüche, **dadurch gekennzeichnet, dass** sie einen Indexierbereich (ZI) betragen.

8. Vorrichtung nach Anspruch 7, **dadurch gekennzeichnet, dass** besagter Indexierbereich (ZI) durch das Fehlen eines Zahns in beiden Verzahnungen (37, 47) gebildet ist.

9. Elektrische Vorrichtung mit mehreren separaten elektrischen Bauelementen (1), insbesondere Photovoltaik-Module, wobei jedes elektrische Bauelement (1) von einem Metallrahmen (3) begrenzt ist, der ausgelegt ist, um an einer metallischen Tragstruktur (10, 20, 50) befestigt zu werden und durch mindestens eine zwischen besagtem Metallrahmen (3) jedes elektrischen Bauelementes (1) und besagter metallischen Tragstruktur (10, 20, 50) eingefügte separate Verbindungsvorrichtung (30, 40, 60, 70, 80) nach einem beliebigen der vorhergehenden Ansprüche elektrisch und separat mit besagter metallischen Tragstruktur (10, 20, 50) verbunden zu werden, wobei besagte getrennte Verbindungsvorrichtung (30, 40, 60, 70, 80) ein Metallblatt beträgt mit zumindest einem geschlossenen Falz (31, 41), der ausgelegt ist, um einen Einfüge-Montegebereich (34, 44) zu bilden, **dadurch gekennzeichnet, dass** besagtes Metallblatt jeder Verbindungsvorrichtung ein elastisches Metallblatt, zum Beispiel aus rostfreiem Federstahl, ist, und dadurch, dass jede Verbindungsvorrichtung zumindest zwei selbstverbindende, in unterschiedlichen Ebenen angeordnete Endbereiche (35, 36 ; 45, 46 ; 35, 61 ; 35, 71 ; 35, 81) beträgt, die ausgelegt sind, um einen elektrischen Kontakt zwischen besagtem Metallrahmen (3) und besagter metallischen Tragstruktur (10, 20, 50) herzustellen, wobei besagte selbstverbindende Endbereiche eine spitze Verzahnung (37, 47) betragen, die ausgelegt ist, um sich im Metall-Material von besagtem Rahmen (3) und von besagter Tragstruktur (10, 20, 50) zu inkrustieren, und die auf einem gefalzten Teil von besagtem Metallblatt so ausgebildet ist, dass sich die Verzahnungen (37, 47) in entgegen gesetzte Richtungen und in besagten unterschiedlichen Ebenen erstrecken, um die Ebene von besagtem Rahmen (3), sowie die Ebene von besagter Tragstruktur (10, 20, 50) zu schneiden, um so wie eine Harpune im Rahmen (3) und in der Tragstruktur (10, 20, 50) dank des Federeffekts des Materials von besagtem Metallblatt eine Verankerung mit einem konstanten Druck zu bilden, und dem Herausziehen des Metallblatts vom Rahmen und von der Tragstruktur entgegen zu wirken, und somit ein Selbstklemmung des Metallblatts zu erwirken, wenn dieses zwischen dem Rahmen und der Tragstrukur eingefügt ist.

## Claims

1. Separate connection device (30, 40, 60, 70, 80) for grounding electrical equipment comprising a plurality of separate electrical components (1), in particular photovoltaic panels, each electrical component (1) being delimited by a metal frame (3) arranged so as to be fastened on a metal supporting structure (10, 20, 50), said separate connection device (30, 40, 60, 70, 80) being intended to be inserted between said metal frame (3) of each electrical component (1) and said metal supporting structure (10, 20, 50) for electrically and separately connecting said metal frame (3) of said electrical component (1) to said metal supporting structure (10, 20, 50), said separate connection device (30, 40, 60, 70, 80) comprising a metal blade comprising at least one closed fold (31, 41) arranged so as to form a plug-on assembly area (34, 44), **characterized in that** said metal blade is an elastic metal blade such as out of stainless spring steel and **in that** said connection device comprises at least two self-connecting end areas (35, 36 ; 45, 46 ; 35, 61 ; 35, 71 ; 35, 81), arranged in separate planes and designed to create an electrical contact between said metal frame (3) and said metal supporting structure (10, 20, 50), said self-connecting end areas comprising a set of sharp teeth (37, 47) arranged in order to be embedded in the metal material of said frame (3) and of said supporting structure (10, 20, 50) and being formed on a folded section of said metal blade so that the teeth (37, 47) extend in opposite directions and in said separate planes intended to intersect the plane of said frame (3) and the plane of said supporting structure (10, 20, 50) when the connection device is mounted, in order to ensure an anchorage in the frame (3) and in the supporting structure (10, 20, 50) like a harpoon, with a constant pressure thanks to the spring effect of the material of said metal blade, opposing to its removal from the frame and from the supporting structure, and thus achieving a self locking of the metal blade once it is inserted between the frame and the supporting structure.

2. Device according to claim 1, **characterized in that** said metal blade has a general U shape, one of the self-connecting end areas (35) being oriented towards the inside of the U, and the other self-connecting end area (36, 61, 71, 81) being oriented towards the outside of the U.

3. Device according to claim 2, **characterized in that** said self-connecting end area (61) oriented towards the outside of the U is located away from said assembly area (34) by means of an extension (62) and oriented in a direction substantially perpendicular to the U.

4. Device according to claim 2, **characterized in that** said self-connecting end area (71) oriented towards the outside of the U is beveled so that the teeth (37) are aligned with a straight line that is not parallel to said assembly area (34).

5. Device according to claim 2, **characterized in that** said self-connecting end area (81) oriented towards the outside of the U is located in way of said assembly area (34).

6. Device according to claim 1, **characterized in that** said metal blade has a general S shape, the two self-connecting end areas (45, 46) being oriented respectively towards the outside of the S.

7. Device according to any of the previous claims, **characterized in that** it includes an indexing area (ZI).

8. Device according to claim 7, **characterized in that** said indexing area (ZI) is formed by the absence of a tooth in each set of teeth (37, 47).

9. Electrical equipment comprising a plurality of separate electrical components (1), in particular photovoltaic panels, each electrical component (1) being delimited by a metal frame (3) arranged so as to be fastened on a metal supporting structure (10, 20, 50) and connected electrically and separately to said metal supporting structure (10, 20, 50) by means of at least one separate connection device (30, 40, 60, 70, 80) according to any of the previous claims, inserted between said metal frame (3) of each electrical component (1) and said metal supporting structure (10, 20, 50), said separate connection device (30, 40, 60, 70, 80) comprising a metal blade comprising at least one closed fold (31, 41) arranged so as to form a plug-on assembly area (34, 44), **characterized in that** said metal blade of each connecting device is an elastic metal blade such as out of stainless spring steel and **in that** each connection device comprises at least two self-connecting end areas (35, 36 ; 45, 46 ; 35, 61 ; 35, 71 ; 35, 81), arranged in separate planes and designed to create an electrical contact between said metal frame (3) and said metal supporting structure (10, 20, 50), said self-connecting end areas comprising a set of sharp teeth (37, 47) arranged in order to be embedded in the metal material of said frame (3) and of said supporting structure (10, 20, 50) and being formed on a folded section of said metal blade so that the teeth (37, 47) extend in opposite directions and in said separate planes intended to intersect the plane of said frame (3) and the plane of said supporting structure (10, 20, 50) in order to ensure an anchorage in the frame (3) and in the supporting structure (10, 20, 50) like a harpoon, with a constant pressure thanks to the spring effect of the material of said metal blade, opposing to its removal from the frame and from the supporting structure, and thus achieving a self locking of the metal blade once it is inserted between the frame and the supporting structure.
